# EUROPÄISCHE PATENTSCHRIFT

(11) **EP 3 423 307 B1**
(45) Veröffentlichungstag und Bekanntmachung des Hinweises auf die Patenterteilung: **09.10.2019**
(21) Anmeldenummer: 17703157.2
(22) Anmeldetag: 06.02.2017
(51) Int. Cl.: B60R 13/02, B29C 45/17, B60N 3/02

(54) **DACHGALERIE FÜR EIN KRAFTFAHRZEUG**
STORAGE COMPARTMENT UNDERNEATH THE ROOF LINING OF A VEHICLE
RÉCEPTACLE EN DESSOUS DU TOIT D'UN VÉHICULE

(30) Priorität: 01.03.2016 DE 102016203357
(43) Veröffentlichungstag der Anmeldung: 09.01.2019
(73) Patentinhaber: Volkswagen Aktiengesellschaft, 38440 Wolfsburg (DE)
(72) Erfinder: GLÖCKNER, Isabel, 30177 Hannover (DE); ZIEHRES, Bodo, 38448 Wolfsburg (DE); HAHNKE, Bernd, 38471 Rühen (DE)
(86) Internationale Anmeldenummer: PCT/EP2017/052555
(87) Internationale Veröffentlichungsnummer: WO 2017/148654

(56) Entgegenhaltungen:
- EP-A1- 0 993 991
- EP-A1- 2 985 187
- EP-A2- 1 293 384
- WO-A1-98/28119
- WO-A1-2007/036037
- JP-A- H09 183 166
- US-A1- 2003 211 311

## Beschreibung

Die vorliegende Erfindung betrifft eine Dachgalerie für ein Kraftfahrzeug gemäß dem Oberbegriff des unabhängigen Vorrichtungsanspruchs sowie ein Kunststoff-Spritzgussverfahren zum Herstellen einer solchen Dachgalerie.

Aus der DE 40 15 375 A1 sind Verkleidungsteile zur Verkleidung einer zum Fahrzeuginnenraum zeigenden Seite einer Dachsäule bekannt, welche eine Vielzahl an Hohlkammern aufweisen, wobei die Hohlkammern über ein Gasinnendruckspritzgussverfahren erzeugt werden. Die darin offenbarten Verkleidungsteile dienen als Aufprallschutzvorrichtung. Dementsprechend ist es hierbei gewünscht, dass sich das Verkleidungsteil plastisch verformen kann und somit die Aufprallenergie zumindest teilweise aufnimmt. Weitere gattungsgemäße Fahrzeuqkarosserie-Dachabschnitte sind beispielsweise aus den Druckschriften EP 0 993 991 A1 oder JP H09 183166 A bekannt. Die EP 0 993 991 A1 offenbart eine Dachgalerie nach dem Oberbegriff von Anspruch 1.

Eine Dachgalerie für ein Kraftfahrzeug und insbesondere für ein Nutzfahrzeug dient zur Verkleidung einer zum Fahrzeuginnenraum zeigenden Seite eines Fahrzeugdaches, wobei die Stabilität der Dachgalerie von großer Bedeutung ist, da diese unter anderem dazu dient, Gepäckstücke und sonstige Gegenstände unterschiedlichen Gewichts aufzunehmen und außerdem als Haltemöglichkeit bzw. als Hilfe zur Aufrichtung eines Insassen fungiert. Dementsprechend ist eine hohe Bauteilsteifigkeit gewünscht, damit sich die Dachgalerie bei Belastung nicht derart verformt, dass die Funktion beeinträchtigt oder gar die Dachgalerie zerstört wird.

Dementsprechend ist es Aufgabe der vorliegenden Erfindung, eine Dachgalerie vorzuschlagen, welche einfach und kostengünstig sowie stabil, optisch und haptisch ansprechend herzustellen ist.

Die voranstehende Aufgabe wird gelöst durch eine Dachgalerie mit den Merkmalen des unabhängigen Vorrichtungsanspruchs und einem Verfahren mit den Merkmalen des unabhängigen Verfahrensanspruchs.

Weitere Merkmale und Details der Erfindung ergeben sich aus den Unteransprüchen, der Beschreibung und den Zeichnungen. Dabei gelten Merkmale und Details, die in Zusammenhang mit der erfindungsgemäßen Dachgalerie beschrieben worden sind, selbstverständlich auch im Zusammenhang mit dem erfindungsgemäßen Kunststoff-Spritzgussverfahren als offenbart und umgekehrt, sodass bezüglich der Offenbarung zu den einzelnen Erfindungsaspekte stets wechselseitig Bezug genommen wird bzw. werden kann.

Durch die in den abhängigen Ansprüchen aufgeführten Maßnahmen sind vorteilhafte Weiterbildungen und Verbesserungen der in den unabhängigen Ansprüchen angegebenen Erfindungsgegenstände möglich.

Erfindungsgemäß weist die Dachgalerie für ein Kraftfahrzeug zur zumindest abschnittsweisen Verkleidung einer zum Fahrzeugraum zeigenden Seite eines Fahrzeugdaches zumindest zwei Haltegriffe und zumindest eine Ablagefläche auf, wobei die Ablagefläche sich zwischen den zwei Haltegriffen erstreckt. Darüber hinaus weist die Dachgalerie zumindest eine an der Ablagefläche angeordnete Eingriffskante auf, wobei die Ablagefläche mit den Haltegriffen und der Eingriffskante ein monolithisches Bauteil bildet. Unter monolithisch soll im Rahmen der Erfindung verstanden werden, dass die Ablagefläche mit den Haltegriffen und der Eingriffskante aus einer einzigen Einheit besteht, welche einteilig und somit durchgängig gebildet ist. Dementsprechend handelt es sich nicht um zusammengesetzte oder verbundene Bauteile.

Die Haltegriffe dienen dem Insassen des Kraftfahrzeuges, insbesondere des Nutzfahrzeuges, dazu, sich mit zumindest einer Hand festzuhalten und sich somit insbesondere bei ruckartigen Bewegungen in Folge von z.B. Lenkbewegungen des Kraftfahrzeuges zu fixieren. Darüber hinaus können die Haltegriffe dazu verwendet werden, dass sich ein Insasse beim Einsteigen in das Kraftfahrzeug an diesen hochziehen kann, sodass z.B. ein vereinfachter Zugang zum Fahrzeug ermöglicht ist. Die Ablagefläche einer Dachgalerie dient zur Aufnahme von Gepäckstücken sowie von Dokumenten der Insassen, sodass diese aufgeräumt und griffbereit in der Nähe der Insassen verstaut werden können. Dabei ist an der Ablagefläche zumindest eine Eingriffskante angeordnet, wobei die Eingriffskante sowohl als optischer und haptischer Abschluss der Ablagefläche und gleichzeitig als Hilfe zur Aufrichtung der Insassen dienen kann, sodass sich die Insassen mit den Händen an der Eingriffskante festhalten und hochziehen können, um somit beispielsweise Gepäckstücke oder Dokumente, welche auf der Ablagefläche verstaut sind, sehen und/oder ergreifen zu können. Dementsprechend können sowohl die Haltegriffe, die Ablagefläche als auch die Eingriffskante mechanisch stark belastet werden, sodass diese eine hohe Bauteilsteifigkeit aufweisen müssen. Um dies zu erreichen werden die Ablagefläche, die Haltegriffe und die Eingriffskante erfindungsgemäß monolithisch ausgebildet. Mehrteilig ausgebildete Dachgalerien haben den Nachteil, dass diese zum einen weniger stabil sind und zum anderen optisch wenig ansprechende Fugen an den Überlappungen der Bauteile aufweisen können. Erfindungsgemäß handelt es sich bei der Dachgalerie um ein Kunststoffbauteil, welches vorzugsweise in einem Kunststoff-Spritzgussverfahren hergestellt wird, sodass die Dachgalerie als ein monolithisches Kunststoff-Spritzgussteil ausgebildet ist.

Vorteilhafterweise ist zumindest in der Eingriffskante zumindest ein Injektionskanal vorgesehen, wodurch die Bauteilsteifigkeit erhöht wird. Ein erfindungsgemäßer Injektionskanal wird vorzugsweise durch eine Fluidinjektionstechnik hergestellt, sodass in einem vorzugsweise parallelen Verfahrensschritt zum Spritzgießen bei einem Kunststoff-Spritzgussverfahren ein Fluid in die Eingriffskante eingeleitet wird, sodass Kunststoffmaterial durch das Fluid verdrängt wird und sich somit ein Injektionskanal in der Eingriffskante bildet, wodurch die Bauteilsteifigkeit zumindest der Eingriffskante erhöht wird. Folglich wird erfindungsgemäß die Dachgalerie als ein monolithisches Bauteil mit zumindest einem Injektionskanal zumindest in der Eingriffskante ausgebildet. Eine erfindungsgemäße Dachgalerie verkleidet vorzugsweise das Fahrzeugdach zumindest auf der Fläche, welche sich oberhalb, das heißt über den Köpfen, der Fahrer bzw. Beifahrer befindet. Somit ist je nach Fahrzeugbreite die Dachgalerie verhältnismäßig groß ausgebildet, sodass bei zu geringer Bauteilsteifigkeit, z.B. bei hohen Belastungen der Eingriffskante, sich die Dachgalerie verformen würde. Um dies zu verhindern, weist die Eingriffskante zumindest einen Injektionskanal auf, der der Volumenkontraktion beim Abkühlen des Kunststoff-Spritzgussteils entgegenwirkt. Durch das Verdrängen der thermoplastischen Seele der Spritzgussformmasse wird eine Gewichtsreduzierung sowie eine Reduzierung der Einfallstellen entlang der Eingriffskante erzielt. Dementsprechend ergibt sich eine verzugsarme Eingriffskante, welche eine erhöhte Bauteilsteifigkeit aufweist.

Erfindungsgemäß ist es bevorzugt, dass die Haltegriffe zumindest einen Griffinjektionskanal aufweisen, wobei insbesondere der Griffinjektionskanal einteilig mit dem Injektionskanal ausgebildet ist. Analog zu dem Injektionskanal wird durch den Griffinjektionskanal erzielt, dass die mit der Ablagefläche und der Eingriffskante monolithisch ausgebildeten Haltegriffe gewichtsreduziert und gleichzeitig mit einer erhöhten Steifigkeit ausgebildet sind. Dementsprechend wird der Griffinjektionskanal durch ein Einleiten eines Fluides mittels einer Injektionsdüse hergestellt, sodass ein Hohlraum gebildet wird, welcher der Volumenkontraktion beim Abkühlen der Kunststoffmasse entgegenwirkt. Dementsprechend können auch beim Haltegriff die Einfallstellen reduziert werden und gleichzeitig verzugsarme Haltegriffe hergestellt werden, sodass diese stabil, optisch und haptisch ansprechend sowie kostengünstig herzustellen sind. Bevorzugt ist der Griffinjektionskanal einteilig und somit monolithisch mit dem Injektionskanal ausgebildet, sodass ein einziger durchgängiger Kanal durch die Eingriffskante und die Haltegriffe ausgebildet ist. Besonders bevorzugt ist hierbei, wenn durch Einführen des Fluids an einer einzigen Stelle, insbesondere an der Eingriffskante, der Injektionskanal und der Griffinjektionskanal gebildet werden. Dadurch wird die Bauteilsteifigkeit entlang der Eingriffskante und entlang der Haltegriffe durch den durchgängig gebildeten Injektionskanal erhöht.

Es ist des Weiteren denkbar, dass zumindest an der Ablagefläche zumindest ein Ablageinjektionskanal vorgesehen ist, wodurch die Bauteilsteifigkeit erhöht wird, wobei insbesondere der Ablageinjektionskanal einteilig mit dem Injektionskanal und/oder dem Griffinjektionskanal ausgebildet ist. Der Ablageinjektionskanal erhöht die Steifigkeit der Ablagefläche, sodass die Verformung der Ablagefläche infolge von Kraftbeaufschlagung verringert wird und somit ein Verformen oder gar ein Bauteilversagen der Ablage reduziert werden kann. Der Ablageinjektionskanal verläuft dabei vorzugsweise zumindest abschnittsweise umfangsseitig der Ablagefläche und/oder zumindest abschnittsweise entlang der Ablagefläche. Somit wird zum einen das Gewicht der Ablagefläche durch das verdrängte Material reduziert und gleichzeitig eine verzugsarme Ablagefläche mit einer erhöhten Bauteilsteifigkeit ausgebildet. Vorteilhaft ist es dabei, wenn der Ablageinjektionskanal einteilig und somit monolithisch mit dem Injektionskanal und/oder dem Griffinjektionskanal ausgebildet ist. Dementsprechend wird der Ablageinjektionskanal durch einmaliges Einleiten eines Fluids durch eine Injektionsdüse an einer einzigen Stelle, insbesondere an einer Stelle entlang der Eingriffskante, ausgebildet und verläuft zumindest abschnittsweise entlang der Eingriffskante, zumindest abschnittsweise entlang durch die Haltegriffe und zumindest abschnittsweise durch bzw. entlang der Ablagefläche. Dementsprechend wird in einem einzigen Verfahrensschritt durch ein Einleiten eines Fluids ein durchgängiger Injektionskanal durch die Eingriffskante, die Haltegriffe und zumindest abschnittsweise entlang oder durch die Ablagefläche gebildet. Somit wird die Steifigkeit der gesamten Dachgalerie durch den ausgebildeten verbundenen Injektionskanal erhöht. Der Ablageinjektionskanal kann auch entlang, d.h. längs und/oder quer entlang, der Ablagefläche verlaufen. Dabei kann es sich z. B. um Verzweigungen handeln, welche von dem Teil des Ablageinjektionskanalabschnitts ausgehen, welcher sich umfangsseitig der Ablagefläche befindet. Dieser Abschnitt kann dabei sinngemäß einen Hauptstrang bilden und die Nebenstränge verlaufen längs und/oder quer über die Ablagefläche.

Vorteilhafterweise kann zumindest eine Aufnahme an der Ablagefläche vorgesehen sein, wobei in die Aufnahme fahrzeuginnenraum-relevante Funktionselemente aufnehmbar sind. Bei den fahrzeuginnenraum-relevanten Funktionselementen kann es sich zum Beispiel um eine Dachkonsole handeln, welche wiederum Elektronikkomponenten, Staufächer oder Rückspiegel aufweisen kann. Die Aufnahme ist dabei vorzugsweise als eine Materialaussparung entlang der Ablagefläche ausgebildet, sodass eine zumindest abschnittsweise komplementär ausgebildete Dachkonsole bzw. fahrzeuginnenraum-relevante Funktionselemente in die Aufnahme angeordnet bzw. an dieser befestigt werden können. Dafür kann die Aufnahme beispielsweise Aufnahmeelemente umfangsseitig aufweisen, wobei es sich beispielsweise um Clipsverbindungen, Schraubenaufnahmen oder ähnliche kraft- und/oder formschlüssige Verbindungselemente handeln kann. Darüber hinaus kann die Aufnahme zur Aufnahme einer Sonnenblende oder für sogenannte DIN-Schächte ausgebildet sein. In diese DIN-Schächte können zum Beispiel Entertainmentsysteme wie ein Radio oder Navigationssysteme oder auch Mautsysteme installiert werden. Das monolithisch ausgebildete Bauteil, welches durch die Ablagefläche mit den Haltegriffen und der Eingriffskante gebildet ist, weist trotz der zusätzlichen Aufnahme, allein aufgrund der monolithischen Bauweise, bereits eine erhöhte Bauteilsteifigkeit auf. Insbesondere der erfindungsgemäße Injektionskanal sorgt dafür, dass trotz der zusätzlichen ausgebildeten Aufnahme eine erhöhte Bauteilsteifigkeit gegeben ist. Dabei ist es erfindungsgemäß ebenfalls denkbar, dass der Injektionskanal sich zumindest abschnittsweise entlang der Aufnahme umfangsseitig erstreckt.

Es ist des Weiteren vorteilhaft, wenn zumindest die Ablagefläche Verstärkungselemente aufweist, wobei die Verstärkungselemente insbesondere als Verstärkungsrippen und/oder Materialausprägungen ausgebildet sein können. Besonders bevorzugt weisen auch die Eingriffskante und/oder die Haltegriffe Verstärkungselemente auf. Die Verstärkungselemente erhöhen die Bauteilsteifigkeit, insbesondere der Ablagefläche, der Eingriffskante und/oder der Haltegriffe, sodass verzugsarme Bauteile mit einer hohen Bauteilsteifigkeit erzielt werden. Die Verstärkungselemente, insbesondere in Form von Verstärkungsrippen und/oder Materialausprägungen, können dabei vertikal und/oder horizontal entlang der Ablagefläche, der Eingriffskante und/oder der Haltegriffe verlaufen. Darüber hinaus kann insbesondere die Ablagefläche Materialausnehmungen aufweisen, sodass eine weitere Gewichtsreduzierung und somit eine Kosteneinsparung erzielt wird.

Vorteilhafterweise ist entlang einer Ablagekante zumindest abschnittsweise ein zusätzlicher Injektionskanal angeordnet. Die Ablagekante ist dabei parallel zu der Eingriffskante entlang der Dachgalerie angeordnet und befindet sich an der Seite der Dachgalerie, welche im eingebauten Zustand zur Windschutzscheibe des Fahrzeugs gerichtet ist. Der an der Ablagekante zusätzlich angeordnete Injektionskanal kann vorzugsweise mittels zumindest einer weiteren Injektionsdüse in der Ablagekante ausgebildet werden. Dementsprechend wird über eine weitere Injektionsdüse ein Fluid in die Ablagekante eingeleitet, sodass sich der zusätzliche Injektionskanal zumindest abschnittsweise entlang der Ablagekante bildet. Durch den zusätzlichen Injektionskanal wird die Bauteilsteifigkeit der Dachgalerie weiter erhöht, wobei es erfindungsgemäß denkbar ist, dass der zusätzliche Injektionskanal derart ausgebildet ist, dass dieser sich bis zum Ablageinjektionskanal erstreckt, sodass vorzugsweise ein die Dachgalerie im Wesentlichen vollständig umfangsseitig umlaufender Injektionskanal ausgebildet ist, wobei aber vorzugsweise eine Abtrennung der Kanäle derart notwendig ist, dass bei einem Einleiten eines Fluids durch zwei Injektionsdüsen die jeweiligen Fluide voneinander getrennt bleiben, um eine zu große Volumenausdehnung bei einem Aufeinandertreffen der beiden Fluide zu verhindern. Dieser Injektionskanal verläuft somit durch die Haltegriffe, die Eingriffskante, die Ablagefläche und die Ablagekante. Dies wird ermöglicht durch das Einleiten eines Fluids durch zumindest zwei Injektionsdüsen, wobei die Injektionsdüsen vorzugsweise parallel zueinander gegenüberliegend angeordnet sind. Dementsprechend ist die zusätzliche Injektionsdüse ebenfalls mittig entlang der Ablagekante angeordnet, sodass sich der Ablageinjektionskanal bzw. der zusätzliche Injektionskanal entlang der Ablagekante von der Mitte aus in horizontaler Richtung und somit von der Mitte der Längskante der Dachgalerie in Richtung der Breitseiten der Dachgalerie ausbreitet.

Gemäß einem weiteren Aspekt der Erfindung ist ein Kunststoff-Spritzgussverfahren zum Herstellen einer erfindungsgemäßen Dachgalerie für ein Kraftfahrzeug beansprucht. Dabei wird zumindest mit einer Injektionsdüse zumindest ein Fluid zumindest abschnittsweise in die Eingriffskante eingeleitet, wodurch ein Injektionskanal hergestellt wird. Damit bringt ein erfindungsgemäßes Kunststoff-Spritzgussverfahren die gleichen Vorteile mit sich, wie sie ausführlich mit Bezug auf die erfindungsgemäße Dachgalerie beschrieben worden sind. Dementsprechend handelt es sich bei dem Kunststoff-Spritzgussverfahren um ein Fluidinjektionsverfahren oder auch Innendruckspritzgießen, wobei durch zumindest eine Injektionsdüse zumindest ein Fluid zumindest abschnittsweise in die Eingriffskante eingeleitet wird, wodurch eine hohle Eingriffskante hergestellt wird. Das Fluid verdrängt dabei in einem Verfahrensschritt nach dem Spritzgießen durch ein eingeleitetes Fluid die thermoplastische Seele der Formmasse, insbesondere Kunststoff. Dementsprechend wird ein Hohlraum in Form eines Injektionskanals gebildet, wobei der Fluidinnendruck bewirkt, dass der Volumenkontraktion beim Abkühlen der Formmasse entgegengewirkt wird. Der durch das Fluid erzeugte Innendruck wird vorzugsweise bis zur Erstarrung der Schmelze aufrechterhalten.

Vorzugsweise erstreckt sich der Injektionskanal dabei entlang zumindest eines Großteils einer Längsseite der Dachgalerie. Besonders vorteilhaft ist es, wenn sich der dadurch gebildete Injektionskanal über die zumindest gesamte Längsseite entlang der Eingriffskante erstreckt. Besonders bevorzugt ist es, wenn durch die Injektionsdüse ein Griffinjektionskanal und ein Ablageinjektionskanal gebildet werden, wobei der Griffinjektionskanal und der Ablageinjektionskanal mit dem Injektionskanal einteilig ausgebildet sind. Dementsprechend kann über lediglich eine Injektionsdüse in einem einzigen Verfahrensschritt ein Injektionskanal entlang der Eingriffskante, der Ablagefläche und der Haltegriffe ausgebildet werden.

Das Fluidinjektionsverfahren reduziert die Kühlzeit, wodurch eine geringere Zykluszeit bei der Herstellung der Dachgalerie erzielt werden kann. Gleichzeitig wird das Bauteilgewicht reduziert, sodass eine Kosteneinsparung bei gleichzeitig erhöhter Bausteifigkeit erreicht wird. Darüber hinaus ergeben sich Vorteile dadurch, dass Einfallstellen entlang des Bauteils reduziert werden können und somit verzugsarme, optisch und haptisch ansprechende Bauteile hergestellt werden. Das Fluid bzw. der vorübergehende Füllstoff kann beispielsweise Wasser oder inertes Gas, insbesondere Stickstoff, sein, welches injiziert wird und somit als eine innere Matrize für die Dachgalerie wirkt. Durch die Verdrängung der Schmelze aus der Eingriffskante und/oder der Ablagefläche und/oder der Haltegriffe wächst somit ein Hohlraum, und die Schmelze wird an bzw. in die äußere Gussform der Spritzgussform gedrückt. Auch eine Kombination von Gas und flüssigem Fluid ist bei der Injektion und somit bei der Bildung eines Injektionskanals denkbar. Der Fluidinnendruck beträgt dabei vorzugsweise zwischen ungefähr 0,1 bar bis ungefähr 200 bar, bevorzugt zwischen ungefähr 10 bar bis ungefähr 100 bar und besonders bevorzugt zwischen ungefähr 20 bar bis ungefähr 70 bar Überdruck gegenüber dem Umgebungsdruck.

Vorteilhafterweise leitet die Injektionsdüse im Wesentlichen mittig der Eingriffskante das Fluid ein, wobei vorzugsweise der Injektionskanal sich beidseitig erstreckt. Wird die Injektionsdüse mittig der Eingriffskante angesetzt und leitet das Fluid so zumindest im Wesentlichen mittig in die Eingriffskante ein, so wird erreicht, dass sich der Injektionskanal gleichmäßig entlang der Eingriffskante erstreckt und sich somit möglichst gleichlang entlang der Längsseite der Ablagefläche an der Eingriffskante erstreckt. Somit wird eine gleichmäßig verteilte Bauteilsteifigkeit erzielt, und gleichzeitig werden Einfallstellen entlang der Eingriffskante vermieden. Von der Mitte der Eingriffskante wird das Fluid entlang der Eingriffskante und vorzugsweise durch die Haltegriffe und zumindest abschnittsweise entlang der Ablagefläche geleitet, sodass die Seele der Formmasse verdrängt wird. Dementsprechend ergibt sich ein einteilig ausgebildeter Injektionskanal mit dem Ablageinjektionskanal, dem Injektionskanal und dem Griffinjektionskanal.

Erfindungsgemäß ist es denkbar, dass über zumindest eine zusätzliche Injektionsdüse ein Fluid in zumindest einen Haltegriff und/oder in die Ablagefläche eingeleitet wird, wodurch der Griffinjektionskanal und/oder der Ablageinjektionskanal gebildet wird. Dementsprechend wird über eine zusätzliche Injektionsdüse an einer weiteren Stelle der Dachgalerie ein Fluid in den zumindest einen Haltegriff und/oder in die Ablagefläche eingeleitet, wodurch ein Griffinjektionskanal und/oder ein Ablageinjektionskanal durch Verdrängen der Seele der Formmasse separat gebildet wird. Dies kann insbesondere dann vorteilhaft sein, wenn die Dachgalerie derart groß dimensioniert ist, dass die Spritzgussmasse bei dem Einsatz nur einer einzigen Injektionsdüse bereits soweit abgekühlt ist, dass das Ausbilden eines durchgehenden Injektionskanals durch die Eingriffskante, die Haltegriffe und die Ablagefläche nicht gewährleistet werden kann. Dementsprechend kann durch eine zusätzliche Injektionsdüse erzielt werden, dass, solange die thermoplastische Formmasse ausreichend weich ist, die entsprechenden Injektionskanäle ausgebildet werden können. Vorzugsweise ist eine Abtrennung der Kanäle vorhanden, sodass bei einem Einleiten eines Fluids durch zwei Injektionsdüsen die jeweiligen Fluide bzw. Kanäle voneinander getrennt bleiben, um eine zu große Volumenausdehnung bei einem Aufeinandertreffen der jeweiligen Fluide zu verhindern.

Es ist des Weiteren denkbar, dass über zumindest eine Überlaufkavität an der Eingriffskante und/oder an zumindest einem Haltegriff und/oder an der Ablagefläche überschüssiges Material entweichen kann. Dementsprechend wird die Seele der thermoplastischen Formmasse über eine solche Ablaufkavität aus der Dachgalerie hinausgeführt. Das entsprechende Fluid, welches zur Ausbildung des Injektionskanals, des Griffinjektionskanals und/oder des Ablageinjektionskanals benutzt wird, verdrängt dabei das Spritzgussformmaterial bis zur Überlaufkavität, welche somit auch das eine Ende des entsprechenden Injektionskanals bildet. Beispielsweise ist es denkbar, dass die Überlaufkavität an zumindest einem Ende eines Haltegriffs und/oder an einer Breitseite der Dachgalerie bzw. der Ablagefläche angeordnet ist. Wird somit mittig der Eingriffskante über die Injektionsdüse das Fluid eingeleitet, so wird die Seele der Spritzgussformmasse von dort aus bis zur Überlaufkavität herausgedrückt. Folglich ist vorzugsweise an jedem Ende eines jeweiligen Fluidkanals eine Überlaufkavität vorhanden bzw. angeordnet, sodass das verdrängte Spritzgussformmaterial aus der Dachgalerie entweichen kann.

Weitere, die Erfindung verbessernde Maßnahmen ergeben sich aus der nachfolgenden Beschreibung zu Ausführungsbeispielen der Erfindung, welche in den Figuren schematisch dargestellt sind. Sämtliche in den Ansprüchen, der Beschreibung oder der Zeichnung hervorgehobenen Merkmale und/oder Vorteile, einschließlich konstruktiven Einzelheiten, räumliche Anordnung und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken.

In den nachfolgenden Figuren werden für die gleichen technischen Merkmale auch von unterschiedlichen Ausführungsbeispielen die identischen Bezugszeichen verwendet.

Es zeigen
- Fig. 1: eine Ausführungsform einer erfindungsgemäßen Dachgalerie,
- Fig. 2: die Ausführungsform der Fig. 1 aus einer anderen Perspektive, und
- Fig. 3: einen Schnitt durch den Injektionskanal der Ausführungsform der Fig. 1.

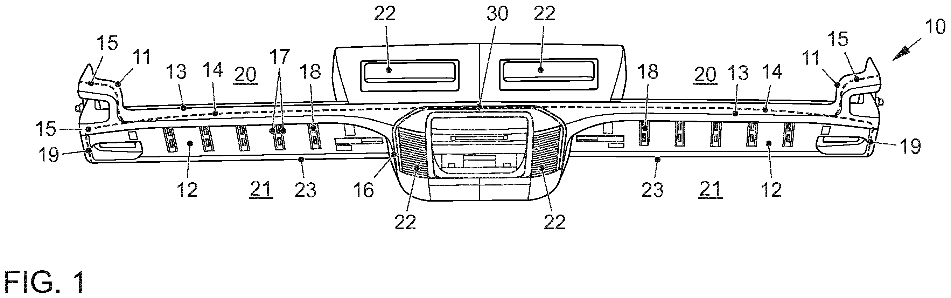

Die Fig. 1 zeigt eine erfindungsgemäße Dachgalerie 10 für ein Kraftfahrzeug zur zumindest abschnittsweisen Verkleidung einer zum Fahrzeuginnenraum 21 zeigenden Seite eines Fahrzeugdachs 20. Die Dachgalerie 10 weist dabei zwei Haltegriffe 11 sowie zwei Ablageflächen 12 auf, wobei sich die Ablageflächen 12 zwischen den zwei Haltegriffen 11 erstrecken. Von dem ersten Haltegriff 11 erstreckt sich entlang der Ablageflächen 12 eine durchgehende Eingriffskante 13 bis zum zweiten Haltegriff 11, wobei die Eingriffskante 13 die eine Längsseite der Ablageflächen 12 bildet bzw. abschließt. Die Ablagefläche 12 ist mit den Haltegriffen 11 und der Eingriffskante 13 als ein monolithisches Bauteil ausgebildet. Durch die Haltegriffe 11, die Eingriffskante 13 und die Breitseite der Ablagefläche 12 verläuft ein Injektionskanal 14, sodass die Ablagefläche 12, die Haltegriffe 11 und die Eingriffskante 13 durch einen gemeinsamen Injektionskanal 14 miteinander verbunden sind bzw. einen gemeinsamen Injektionskanal 14 aufweisen. Die in der Fig. 1 gezeigte Dachgalerie 10 weist entlang der Ablageflächen 12 Materialausnehmungen 18 auf, welche als Schlitze 18 beabstandet zueinander und orthogonal zu der Eingriffskante 13 ausgebildet sind. Die Materialausnehmungen 18 ermöglichen eine Gewichts- und Materialreduktion der Dachgalerie 10 und somit eine kostengünstige Herstellung einer spritzgegossenen Dachgalerie 10. Im Bereich der Materialausnehmungen 18 sind Verstärkungselemente 17 in Form Materialausprägungen 17 angeordnet, welche die Bauteilsteifigkeit erhöhen.

Der Injektionskanal 14 erstreckt sich von der Eingriffskante 13 in die beiden Haltegriffe 11, wobei sich der Injektionskanal 14 dabei übergangslos in den Griffinjektionskanal 15 erstreckt und somit einteilig mit dem Injektionskanal 14 ausgebildet ist. Darüber hinaus erstreckt sich der Injektionskanal 14 von der Eingriffskante 13 entlang der Breitseite der Dachgalerie 10 bzw. der Ablageflächen 12 in den Ablageinjektionskanal 19 hinein. Dementsprechend sind der Ablageinjektionskanal 19, der Griffinjektionskanal 15 und der Injektionskanal 14 durchgängig und unterbrechungsfrei miteinander verbunden. Somit wird durch die Injektion eines Fluides ein einziger Injektionskanal 14 gebildet, welcher die Ablagefläche 12, die Haltegriffe 11 und die Eingriffskante 13 miteinander verbindet.

Mittig in der Dachgalerie 10 ist die Aufnahme 16 angeordnet, in welcher fahrzeuginnenraum-relevante Funktionselemente 22 angeordnet sind. Dabei handelt es sich zum einen um in den Fahrzeuginnenraum und zum Insassen gerichtete Luftauslässe 22 sowie zum Fahrzeugdach 20 gerichtete DIN-Schächte 22. Die beiden DIN-Schächte 22 sind dabei derart ausgestaltet, dass zum Beispiel Entertainmentsysteme wie Radios oder Navigationssysteme darin aufgenommen werden können. Neben den als Belüftungsschlitze 22 ausgebildeten Funktionselementen 22 befindet sich in der Aufnahme 16 Platz zur Aufnahme einer Dachkonsole, welche von den beiden Luftauslässen 22 umschlossen ist. Parallel zur Eingriffskante 13 ist die Ablagekante 23 an dem anderen Ende der Ablageflächen 12 ausgebildet. Die Ablagekante 23 ist dabei zur Windschutzscheibe eines Fahrzeuges hin ausgerichtet.

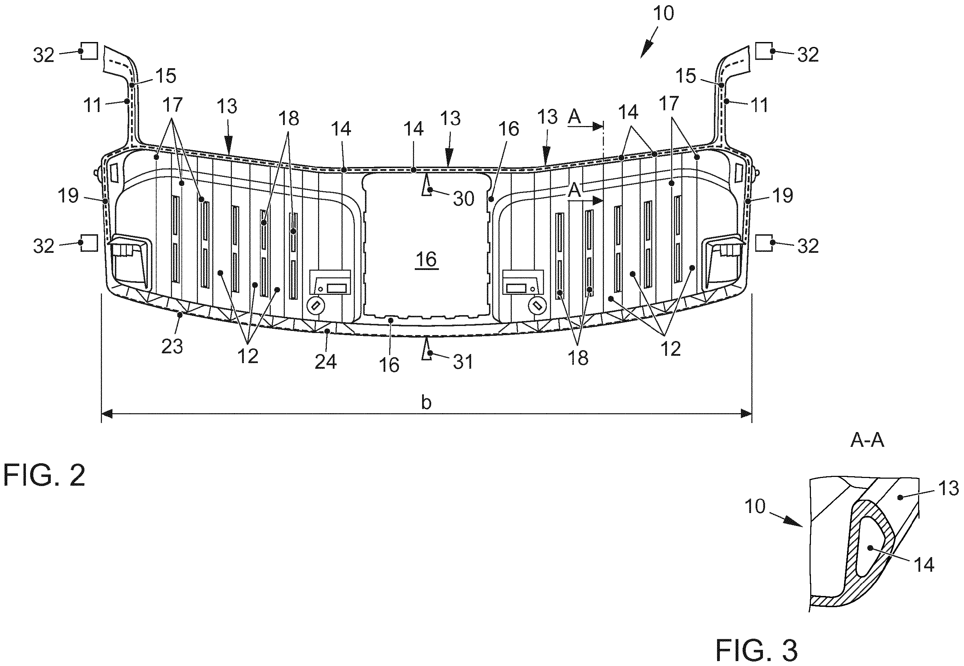

Die Fig. 2 zeigt die erste Ausführungsform der erfindungsgemäßen Dachgalerie 10 aus einer anderen Perspektive, aufweisend zwei Haltegriffe 11 sowie zwei Ablageflächen 12, wobei sich die Ablageflächen 12 auch in der Fig. 2 zwischen den zwei Haltegriffen 11 erstrecken. An den Ablageflächen 12 ist die Eingriffskante 13 angeordnet, wobei die Haltegriffe 11 und die Eingriffskante 13 über einen gemeinsamen Injektionskanal 14 verfügen. Der Injektionskanal 14 erstreckt sich dabei von der Mitte der Dachgalerie 10 bzw. der Eingriffskante 13 in Richtung der Haltegriffe 11, sodass in den Haltegriffen 11 die Griffinjektionskanäle 15 gebildet werden. Von den Haltegriffen 11 und der Eingriffskante 13 erstreckt sich der Injektionskanal 14 weiter entlang der Breitseite der Dachgalerie 10 bzw. der Ablageflächen 12 in den Ablageinjektionskanal 19 herein. Somit wird ein einziger Injektionskanal 14, 15, 19 gebildet, welcher sich von der Eingriffskante 13 zu den Haltegriffen 11 und den Breitseiten der Ablagefläche 12 hin erstreckt. In Fig. 2 ist außerdem schematisch eine Injektionsdüse 30 gezeigt, welche mittig an der Eingriffskante 13 angeordnet wird und über welche das Fluid in die Eingriffskante 13 eingeleitet wird. Ebenfalls mittig der Dachgalerie 10 ist die Aufnahme 16 zur Aufnahme von fahrzeuginnenraum-relevanten Funktionselementen angeordnet. Dabei ist die Aufnahme 16 als eine Materialausnehmung 16 ausgebildet, wobei umfangsseitig der Aufnahme 16 Befestigungselemente für die fahrzeuginnenraum-relevanten Funktionselemente angeordnet sind. Darüber hinaus weisen die Ablageflächen 12 Verstärkungselemente 17 bzw. Materialausprägungen in Form von Verstärkungsrippen 17 bzw. Materialausprägungen 17 auf, welche orthogonal zur Eingriffskante 13 ausgebildet sind und sich über die gesamte Ablagefläche 12 zwischen der Eingriffskante 13 und der Ablagekante 23 erstrecken. Insbesondere im Bereich der Materialausnehmungen 16 sind die Materialausprägungen 17 angeordnet, sodass die Bauteilsteifigkeit erhalten bleibt beziehungsweise erhöht wird. Parallel zu den Verstärkungsrippen 17 verlaufen Materialausnehmungen 18, wobei abwechselnd Materialausnehmungen 18 und Verstärkungsrippen 17 bzw. Materialausprägungen verlaufen. An der Ablagekante 23 ist schematisch eine zusätzliche Injektionsdüse 31 gezeigt, wobei die zusätzliche Injektionsdüse 31 einen zusätzlichen Injektionskanal 24 ausbildet, indem ein Fluid durch die Injektionsdüse 31 in die Ablagekante 23 eingeleitet wird. Der Injektionskanal 14 bzw. der zusätzliche Injektionskanal 24 erstreckt sich dabei über die gesamte Breite b der Dachgalerie 10 bzw. der Längsseite der Ablageflächen 12. An dem einen Ende der Haltegriffe 11, welche beabstandet zur Eingriffskante 13 angeordnet sind, befinden sich Überlaufkavitäten 32, aus denen die Seele des thermoplastischen Formmaterials der Dachgalerie 10 in Folge der Injektion des Fluids über die Injektionsdüse 30 entweichen kann. Darüber hinaus befinden sich jeweils eine Überlaufkavität 32 an der Breitseite der Dachgalerie 10 bzw. der Ablageflächen 12 am Ende des Ablageinjektionskanals 19. Auch über diese Überlauf-Kavitäten 32 wird das überschüssige Material beim Spritzgießvorgang aus der Dachgalerie 10 heraus befördert.

Die Fig. 3 zeigt einen Ausschnitt der erfindungsgemäßen Dachgalerie 10, wobei es sich bei der Fig. 3 um einen Schnitt durch den Injektionskanal 14 an der Eingriffskante 13 handelt. Dementsprechend ist der Injektionskanal 14 als eine Schnittfläche 14 gezeigt, welche durch das Einleiten eines Fluids über die Injektionsdüse 30 entsteht. Der Injektionskanal 14 ersetzt gewissermaßen die thermoplastische Seele der Formmasse der Eingriffskante 13, sodass der Injektionskanal 14 als ein Hohlraum ausgebildet ist und bei Gewichtsreduzierung gleichzeitig eine erhöhte Bauteilsteifigkeit erzielt. Nach dem Einleiten des Fluids durch die Injektionsdüse 30 verbleibt somit ein dickwandiges Profil für die Eingriffskante 13, wobei im Kern der Hohlraum als Injektionskanal 14 übrig bleibt.

Die voranstehende Erläuterung der Ausführungsform beschreibt die vorliegende Erfindung ausschließlich im Rahmen von Beispielen. Selbstverständlich können einzelne Merkmale der Ausführungsform, sofern technisch sinnvoll, frei miteinander kombiniert werden, ohne den Rahmen der vorliegenden Erfindung zu verlassen.

### Bezugszeichenliste

- 10: Dachgalerie
- 11: Haltegriff
- 12: Ablagefläche
- 13: Eingriffskante
- 14: Injektionskanal
- 15: Griffinjektionskanal
- 16: Aufnahme
- 17: Verstärkungselemente, insbesondere Verstärkungsrippen
- 18: Materialausnehmung
- 19: Ablageinjektionskanal

- 20: Fahrzeugdach
- 21: Fahrzeuginnenraum
- 22: Funktionselement
- 23: Ablagekante
- 24: zusätzlicher Injektionskanal

- 30: Injektionsdüse
- 31: zusätzliche Injektionsdüse
- 32: Überlaufkavität

- b: Breite/Längsseite der Dachgalerie 10

## Patentansprüche

1. Dachgalerie (10) für ein Kraftfahrzeug zur zumindest abschnittsweisen Verkleidung einer zum Fahrzeuginnenraum (21) zeigenden Seite eines Fahrzeugdaches (20), aufweisend zumindest zwei Haltegriffe (11), zumindest eine Ablagefläche (12), wobei die Ablagefläche (12) sich zwischen den zwei Haltegriffen (11) erstreckt,
und zumindest eine an der Ablagefläche (12) angeordnete Eingriffskante (13), **dadurch gekennzeichnet,**
**dass** die Ablagefläche (12) mit den Haltegriffen (11) und der Eingriffskante (13) ein monolithisches Bauteil bildet, sodass die Ablagefläche (12) mit den Haltegriffen (11) und der Eingriffskante (13) aus einer einzigen Einheit gebildet ist, welche einteilig und somit durchgängig gebildet ist, wobei zumindest in der Eingriffskante (13) zumindest ein Injektionskanal (14) vorgesehen ist.

2. Dachgalerie (10) nach Anspruch 1, **dadurch gekennzeichnet,**
**dass** die Haltegriffe (11) zumindest einen Griffinjektionskanal (15) aufweisen, wobei insbesondere der Griffinjektionskanal (15) einteilig mit dem Injektionskanal (14) ausgebildet ist.

3. Dachgalerie (10) nach einem der vorhergehenden Ansprüche,
**dadurch gekennzeichnet,**
**dass** zumindest an der Ablagefläche (12) zumindest ein Ablageinjektionskanal (19) vorgesehen ist, wobei insbesondere der Ablageinjektionskanal (19) einteilig mit dem Injektionskanal (14) und/oder dem Griffinjektionskanal (15) ausgebildet ist.

4. Dachgalerie (10) nach einem der vorhergehenden Ansprüche,
**dadurch gekennzeichnet,**
**dass** zumindest eine Aufnahme (16) an der Ablagefläche (12) vorgesehen ist, wobei in die Aufnahme (16) fahrzeuginnenraum-relevante Funktionselemente (22) aufnehmbar sind.

5. Dachgalerie (10) nach einem der vorhergehenden Ansprüche,
**dadurch gekennzeichnet,**
**dass** zumindest die Ablagefläche (12) Verstärkungselemente (17), insbesondere Verstärkungsrippen (17) und/oder Materialausprägungen (17) aufweist, insbesondere dass die Eingriffskante (13) und/oder die Haltegriffe (11) Verstärkungselemente (17) aufweisen.

6. Dachgalerie (10) nach einem der vorhergehenden Ansprüche,
**dadurch gekennzeichnet,**
**dass** entlang einer Ablagekante (23) zumindest abschnittsweise ein zusätzlicher Injektionskanal (24) angeordnet ist.

7. Kunststoff-Spritzgussverfahren der Herstellung einer Dachgalerie (10) nach einem der vorhergehenden Ansprüche für ein Kraftfahrzeug,
**dadurch gekennzeichnet,**
**dass** mit zumindest einer Injektionsdüse (30) zumindest ein Fluid zumindest abschnittsweise in die Eingriffskante (13) eingeleitet wird, wodurch ein Injektionskanal (14) hergestellt wird.

8. Kunststoff-Spritzgussverfahren nach Anspruch 7,
**dadurch gekennzeichnet,**
**dass** die Injektionsdüse (30) im Wesentlichen mittig der Eingriffskante (13) das Fluid einleitet, wobei vorzugsweise der Injektionskanal (14) sich beidseitig erstreckt.

9. Kunststoff-Spritzgussverfahren nach Anspruch 7 oder 8,
**dadurch gekennzeichnet,**
**dass** über zumindest eine zusätzliche Injektionsdüse (31) ein Fluid in zumindest einen Haltegriff (11) und/oder in die Ablagefläche (12) eingeleitet wird, wodurch der Griffinjektionskanal (15) und/oder der Ablageinjektionskanal (19) gebildet wird.

10. Kunststoff-Spritzgussverfahren nach einem der Ansprüche 7 bis 9,
**dadurch gekennzeichnet,**
**dass** über zumindest eine Überlaufkavität (32) an der Eingriffskante (13) und/oder an zumindest einem Haltegriff (11) und/oder an der Ablagefläche (12) überschüssiges Material entweichen kann.

## Claims

1. A roof gallery (10) for a motor vehicle for at least partially lining a side of a vehicle roof (20) facing the vehicle interior (21), comprising at least two handles (11), at least one storage surface (12), wherein said storage surface (12) extends between the two handles (11), and at least one engagement edge (13) arranged at the storage surface (12),
**characterized in**
**that** the storage surface (12) forms a monolithic component together with the handles (11) and the engagement edge (13), so that the storage surface (12) together with the handles (11) and the engagement edge (13) is formed from a single unit, which is integrally and thus continuously formed, wherein at least in the engagement edge (13) at least one injection channel (14) is provided.

2. The roof gallery (10) according to Claim 1,
**characterized in**
**that** the handles (11) have at least one handle injection channel (15), wherein in particular the handle injection channel (15) is integrally formed with the injection channel (14).

3. The roof gallery (10) according to any one of the preceding claims,
**characterized in**
**that** at least at the storage surface (12) at least one storage injection channel (19) is provided, wherein in particular the storage injection channel (19) is integrally formed with the injection channel (14) and/or the handle injection channel (15).

4. The roof gallery (10) according to any one of the preceding claims,
**characterized in**
**that** at least one receptacle (16) is provided at the storage surface (12), wherein functional elements (22) relevant to the vehicle interior can be accommodated in the receptacle (16).

5. The roof gallery (10) according to any one of the preceding claims,
**characterized in**
**that** at least the storage surface (12) has reinforcing elements (17), in particular reinforcing ribs (17) and/or material characteristics (17), in particular, that the engagement edge (13) and/or the handles (11) have reinforcing elements (17).

6. The roof gallery (10) according to any one of the preceding claims,
**characterized in**
**that** along a storage edge (23) at least in sections an additional injection channel (24) is arranged.

7. A plastic injection molding method for manufacturing a roof gallery (10) according to any one of the preceding claims for a motor vehicle,
**characterized in**
**that** with at least one injection nozzle (30) at least one fluid is introduced at least in sections into the engagement edge (13), whereby an injection channel (14) is produced.

8. The plastic injection molding method according to Claim 7,
**characterized in**
**that** the injection nozzle (30) introduces the fluid substantially in the center of the engagement edge (13), wherein preferably the injection channel (14) extends on both sides.

9. The plastic injection molding method according to Claim 7 or 8,
**characterized in**
**that** via at least one additional injection nozzle (31) a fluid is introduced into at least one handle (11) and/or into the storage surface (12), whereby the handle injection channel (15) and/or the storage injection channel (19) is formed.

10. The plastic injection molding method according to any one of Claims 7 to 9,
**characterized in**
**that** excess material can escape via at least one overflow cavity (32) at the engagement edge (13) and/or at at least one handle (11) and/or at the storage surface (12).

## Revendications

1. Galerie de toit (10) pour un véhicule automobile destinée à l'habillage au moins par tronçons d'un côté d'un toit de véhicule (20) dirigé vers l'habitacle du véhicule (21), comportant au moins deux poignées (11), au moins une surface de dépose (12), la surface de dépose (12) s'étendant entre les deux poignées (11), et au moins une arête de prise (13) disposée sur la surface de dépose (12),
**caractérisée en ce que**
la surface de dépose (12) avec les poignées (11) et l'arête de prise (13) forme un composant monolithique de telle sorte que la surface de dépose (12) avec les poignées (11) et l'arête de prise (13) est formée à partir d'une seule unité qui est formée d'une seule pièce et donc de façon continue, au moins un canal d'injection (14) étant prévu dans l'arête de prise (13).

2. Galerie de toit (10) selon la revendication 1,
**caractérisée en ce que**
les poignées (11) comportent au moins un canal d'injection de poignée (15), en particulier le canal d'injection de poignée (15) étant constitué d'une seule pièce avec le canal d'injection (14).

3. Galerie de toit (10) selon l'une des revendications précédentes,
**caractérisée en ce**
**qu'**au moins un canal d'injection de dépose (19) est prévu au moins sur la surface de dépose (12), en particulier le canal d'injection de dépose (19) étant constitué d'une seule pièce avec le canal d'injection (14) et/ou le canal d'injection de poignée (15).

4. Galerie de toit (10) selon l'une des revendications précédentes,
**caractérisée en ce**
**qu'**au moins un logement (16) est prévu sur la surface de dépose (12), des éléments fonctionnels (22) importants pour l'habitacle du véhicule pouvant être logés dans le logement (16) .

5. Galerie de toit (10) selon l'une des revendications précédentes,
**caractérisée en ce**
**qu'**au moins la surface de dépose (12) comporte des éléments de renfort (17), en particulier des nervures de renfort (17) et/ou des estampages du matériau, en particulier en ce que l'arête de prise (13) et/ou les poignées (11) comportent des éléments de renfort (17).

6. Galerie de toit (10) selon l'une des revendications précédentes,
**caractérisée en ce que**
qu'un canal d'injection (24) supplémentaire est disposé le long d'une arête de dépose (23) au moins par tronçons.

7. Procédé de moulage par injection de matière plastique destiné à la fabrication d'une galerie de toit (10) selon l'une des revendications précédentes pour un véhicule automobile,
**caractérisé en ce**
**qu'**au moins un fluide est introduit au moins par tronçons dans l'arête de prise (13) avec au moins une buse d'injection (30), ce qui fait qu'un canal d'injection (14) est réalisé.

8. Procédé de moulage par injection de matière plastique selon la revendication 7,
**caractérisé en ce que**
la buse d'injection (30) introduit le fluide essentiellement au centre de l'arête de prise (13), le canal d'injection (14) s'étendant de préférence des deux côtés.

9. Procédé de moulage par injection de matière plastique selon la revendication 7 ou 8,
**caractérisé en ce que**
qu'un fluide est introduit dans au moins une poignée (11) et/ou dans la surface de dépose (12) par le biais d'au moins une buse d'injection (31) supplémentaire, ce qui fait que le canal d'injection de poignée (15) et/ou le canal d'injection de dépose (19) est formé.

10. Procédé de moulage par injection de matière plastique selon l'une des revendications 7 à 9,
**caractérisé en ce que**
le matériau en excès peut s'échapper par le biais d'au moins une cavité de trop-plein (32) sur l'arête de prise (13) et/ou sur au moins une poignée (11) et/ou sur la surface de dépose (12) .
